# EUROPEAN PATENT SPECIFICATION

(11) **EP 1 017 573 B1**
(45) Date of publication and mention of the grant of the patent: **13.11.2002**
(21) Application number: 98935377.6
(22) Date of filing: 25.07.1998
(51) Int. Cl.: B44B 1/00

(54) **METHOD FOR MANUFACTURING AN EMBOSSING ROLLER**
VERFAHREN ZUM HERSTELLEN VON PRÄGEWALZEN
PROCEDE DE FABRICATION D'UN CYLINDRE GAUFREUR

(43) Date of publication of application: 12.07.2000
(73) Proprietor: Hyon, Jeong Soon, Seoul 135-240 (KR)
(72) Inventor: Hyon, Jeong Soon, Seoul 135-240 (KR)
(74) Representative: Hallybone, Huw George
(86) International application number: KR9800226
(87) International publication number: WO00006396

(56) References cited:
- DE-A- 1 905 198
- DE-A1- 3 405 985
- PATENT ABSTRACTS OF JAPAN vol. 008, no. 143 (M-306) 07 April 1984 & JP 59 041 221 A 07 March 1984

## Description

### TECHNICAL FIELD

The present invention relates to a method of manufacturing an embossing roller used to continuously apply the embossing process on the surface of various goods such as artificial leather or thermoplastic resin, and more particularly to a method for manufacturing an embossing roller by means of a master roller, through which it is possible to manufacture many embossing rollers of the same pattern, at the same time, with the result of shortening the manufacturing process of the embossing roller.

### BACKGROUND ART

Generally, to artificially reproduce the surface pattern of a natural leather, etc., the original pattern is engraved onto the surface of a synthetic-resin or steel paste, which is then pressed against the product, whereby reproducing the pattern identical to the original onto the surface of the product.

There are various methods which have been developed, wherein the original pattern is engraved onto the surface of synthetic resins, etc. In addition, various embossing rollers which have been manufactured by using the above method are currently in use.

However in the aforementioned method of manufacturing embossing rollers, the manufacturing process was demanding and difficult, and there was the problem of inadequate fines on the surface of the manufactured roller for making a product of high quality.

For example, in Korean Patent Publication No. 82-2341, engraved silicone sheets are manufactured by applying silicone onto the original copy in order to manufacture embossing rollers. A number of these silicone sheets are contiguously attached onto the interior of the cylinder, into which an inner cylinder having an interval of 5mm from said silicone sheet is inserted. Thereafter, a mixture of epoxy resin and plasticizer is injected into said interval for hardening.

After hardening of said mixture, the outer cylinder and the silicone sheets are removed. Then, an embossed epoxy-resin roller is obtained, which is attached onto the outer peripheral surface of the inner cylinder. On the surface of said roller, there remains the connecting traces of said silicone sheets.

Put this roller again into another outer cylinder and inject silicone. When the silicone is hardened and removed from the epoxy resin roller, an engraved silicone tube is obtained. Then the silicone tube is put into a cylinder and a roller is inserted therein. An adhesive agent is injected between the tube and the roller for hardening. This method produces an embossing roller as the silicone tube is attached onto the outer surface of the roller.

In an embossing roller produced by this method, the surface of the original pattern is successively reproduced, and since the connecting traces of the silicone sheet do not remain therein, the original pattern can be reproduced onto the products.

However, the above conventional method was developed mainly so that the surface of the embossing roller would have the same engraved pattern as the original copy without any connecting traces. Therefore even if the patterns are from the same original copy, the deterioration of successive copies is a disadvantage that could not be resolved.

Also the former method for producing silicone embossing rollers can produce only one roller at a time. Therefore if the roller is no longer usable (since the characteristic of silicone is that it wears out fast, and after using the embossing roller for 100,000m, the surface wears out and is no longer usable), one must go through the inconvenience of repeating the above production method to obtain another silicone embossing roller.

In the reproduction process, the pattern may be different from the initial pattern, which would create a problem of not being able to satisfy the needs of a large order (300,000~400,000 m).

DE-A1-3 405 985 discloses a method for making resiliently faced rolls and to rolls produced thereby.

### SUMMARY OF THE INVENTION

The present invention was devised to solve the aforementioned problems, which comprises checking and correcting the shape of the pattern and the surface condition before manufacturing the embossing roller, in order to obtain a roller of a fine pattern without leaving connecting traces. Further, the objective of the present invention lies in providing a method of manufacturing an embossing roller, which allows mass production of uniform products, in order to directly produce an embossing roller from the master roller in case of wear and tear of the silicone embossing roller.

The term "embossing roller" used herein means a cylinder in the form of a roller that has an engraved silicone applied and hardened to its surface.

The term "silicone tube" used here means a silicone sheet curved into a tube and its hems attached together to form a tube, whereby depending on the way the tube is curved, the pattern on the surface of the silicone will form on the inner or outer side of the tube.

The term "synthetic resin" used here means the same as the above silicone tube but the material of which is synthetic resin.

The term "master roll" used here means the mother roller with engravings used to produce the embossing roller of embossed caring.

### BRIEF DESCRIPTION OF THE DRAWINGS

The above objectives and other advantages of the present invention will become more apparent by preferred embodiments with reference to attached drawings.

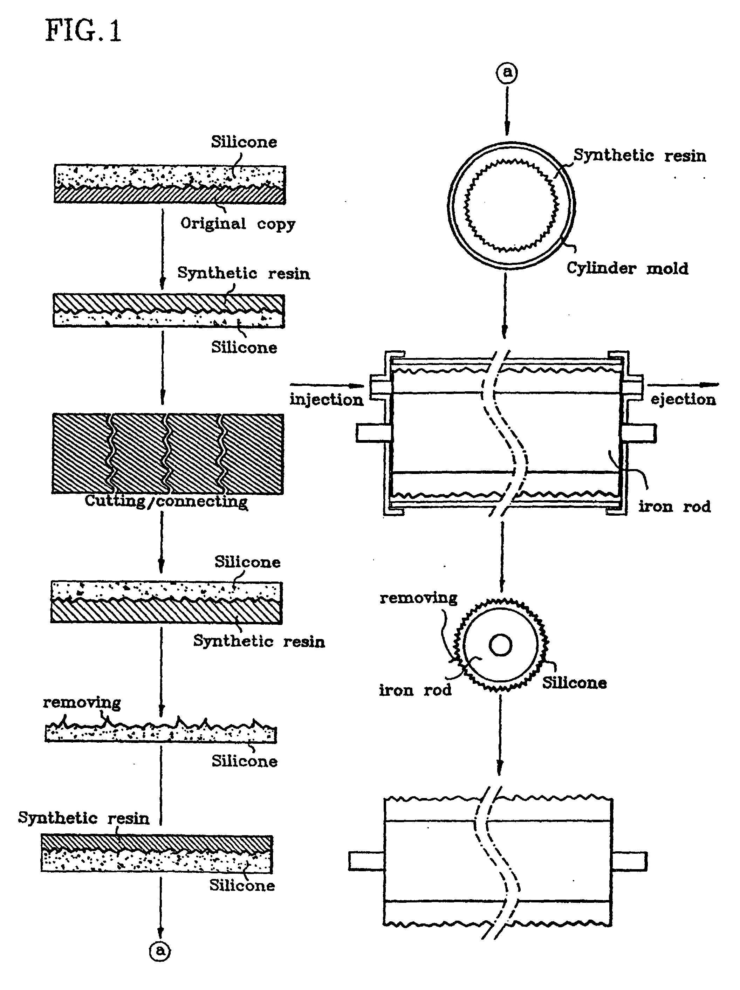

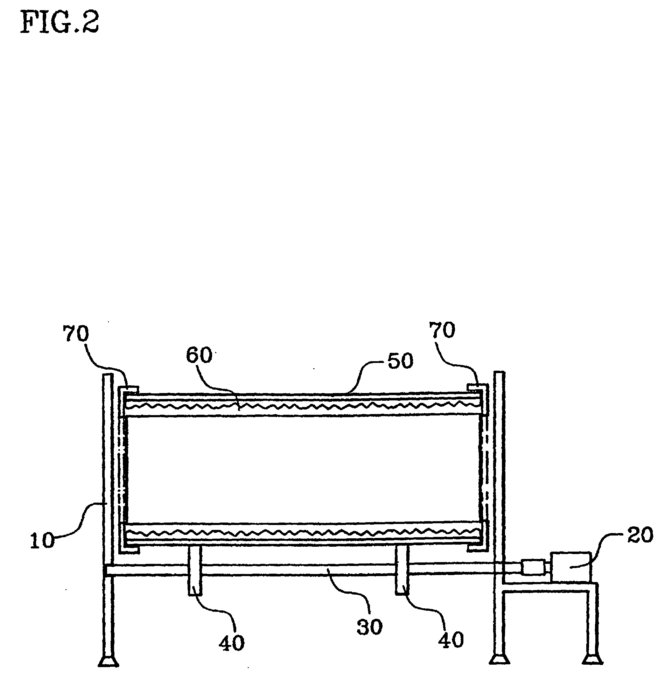

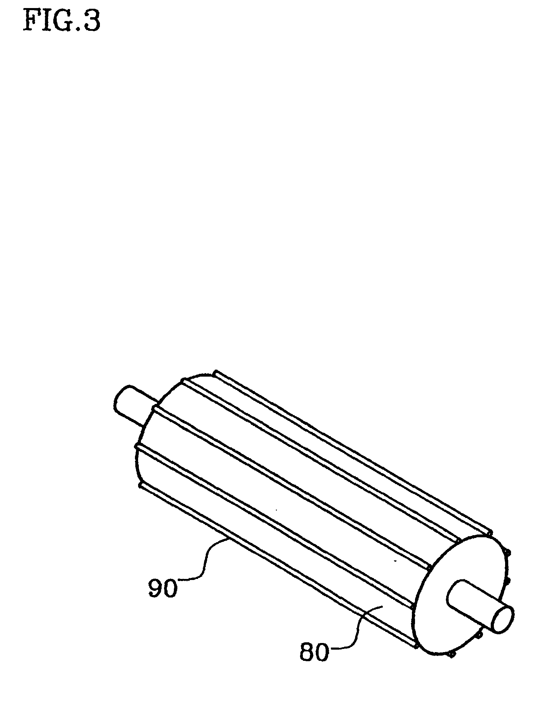

Figure 1 is a flow chart illustrating the production of an embossing roller according to the present invention. Figure 2 is a structural diagram of a device for manufacturing a master roller which may be used in a method according to the present invention. Figure 3 is an outline of an iron bar having a member for adhesion of silicone according to the present invention.

### DETAILED DESCRIPTION OF THE PREFFERED EMBODIMENT

Here, the present invention will be explained in detail with reference to accompanying drawings.

The manufacturing process of the embossing roller according to the present invention is thoroughly illustrated in Figure 1.

The explanation of the manufacturing process is as follows: Since the form of a pattern of leather is different according to its region, one must first choose the region to be reproduced from the original copy of leather at the time of manufacturing the synthetic leather. The selected original copy must be washed and cleaned, and then the silicone is mixed and placed in vacuum before it is applied onto the original copy. The reason for this placement in a vacuum is that an undesirable design will result due to the air bubbles between the contact surface of the original copy and silicone if air bubbles exist in the mixed silicone.

Generally, silicone will harden at room temperature of 25□ in 24 hours, and after 24 hours when the silicone is completely hardened, the hardened silicone is separated from the original copy, with the result of obtaining an engraved silicone sheet.

Pour synthetic resin onto the engraved surface of the silicone sheet, and let it harden. The synthetic resin here should also go through the vacuum process to remove air bubbles. The synthetic resin used herein should be one with a smooth characteristic such as PVC or Polyurethane, and the thickness thereof should be kept at 0.5-2mm.

If the synthetic resin applied onto the silicone sheet hardens and forms a synthetic resin sheet, it should be separated from the silicone sheet. The removed synthetic resin sheet should have the same embossed carving as that of the original.

The synthetic resin sheet manufacturing process should be repeated, and several embossed carving resin sheets with the same pattern and size should be produced and connected together. Before connecting the synthetic resin sheets, the sheets must go through a cutting process.

For the connected synthetic resin sheets to produce mutual harmony as a whole, the connecting edges of the synthetic resin must be cut so the pattern becomes sequential. Then the cut synthetic resin sheets must be stuck together by the touching surfaces. Like this if you connect several synthetic resin sheets, the end outcome will be a synthetic resin sheet of several times the size of the first original.

Again apply vacuum treated silicone onto the surface of the large connected synthetic resin sheet, and let it harden. If the hardened silicone is removed from the synthetic resin sheet, you will obtain a negative shaped silicone sheet several times larger than the initial silicone sheet.

In the above silicone sheet, not only the pattern of the original copy will be obvious but also the connecting traces from the synthetic will be visible. The reason being that if silicone is applied to the synthetic resin sheet, the silicone will make its way into the connecting parts of the synthetic resin, and thus these traces will be visible on the surface of the hardened silicone sheet.

Therefore after removing the silicone sheet from the synthetic resin sheet, use appropriate tools and chemicals to remove traces of the connections from the hardened silicone to obtain a clean negative shaped silicone sheet.

After this process you will have a negative shaped silicone sheet 120% larger than the embossing roller that you want to make, and apply synthetic resin to the silicone sheet.

After the above synthetic resin is vulcanized, and you remove it from the silicone sheet, you will have a large synthetic resin sheet that has several connected patterns from the original copy but do not have the connecting traces.

The synthetic resin sheet produced here should be rolled to make a tube and then placed therein to fit inside a cylinder mold. The sheet must be rolled so that the pattern faces the inside, and then the hems must be connected and placed exactly inside the cylinder mold.

In this case the outer surface of the synthetic resin sheet and the inner surface of the mold must fit tightly so it does not turn loosely inside the cylinder mold.

In the above mold, insert an iron rod and make sure the distance between the iron rod and the synthetic resin tube is 5-20mm. Then inject silicone into the space between the iron rod and the resin tube. In the above case, the tighter the space is, the cooling effect of the silicone becomes better, thus creating better plasticity.

As shown in Figure 1, if caps are fitted onto the ends of the cylinder molds, and through the hole in the cap, the axis of the iron rod can be fit in, thus creating a uniform distance between the resin sheet and the rod. The caps also completely seal the cylinder mold.

Through the injection hole on one side of the cap vacuum, the treated silicone should be injected in between the synthetic resin sheet and the iron rod. At the other end of the cap, there is an ejection hole for the remaining air that is inside, thus the air will be pushed out by the silicone, and this will prevent air bubbles from forming.

After the silicone is completely vulcanized inside the cylinder mold, remove the mold and the synthetic resin tube, and you will have a hardened embossing carved silicone applied to the outside of the iron rod, and this is the embossing roller.

In the above silicone roller, there will be traces of the connections of the synthetic resin tube. Using the appropriate tools and chemicals, remove the traces completely, and you will then have a perfectly reproduced embossing carved silicone embossing roller.

The above method is the most basic and decent method of the present invention, and the products produced are not limited to artificial leather but may include seats, film, etc., made from thermoplastic synthetic resin, and all products that bear surface patterns.

Explaining another part of this invention, the making of the master roller is as follows: Take the final silicone embossing roller made from the process and apply smooth synthetic resin to the surface, and let the resin harden completely.

After the vulcanization, remove the tube-formed synthetic resin applied to the silicone embossing roller, and turn it around so the negative shape faces outwards. Since the above synthetic resin tube does not have a connecting part it will not tear when turned outwards.

This synthetic resin tube is the master roller, and if the silicone embossing roller is no longer usable you can produce the same pattern embossing roller through the master roller and use it again to produce products of the same pattern.

If we look at the process of reproducing an embossing roller, we take the finished master roller, turn the pattern inwards and insert it into a cylinder mold. The rest of the process is the same as injecting silicone into the mold and producing an embossing roller.

If the master roll is used to produce many silicone rollers, it enables one to reproduce the same pattern in mass quantities and to create a uniform quality and trustable products.

On the other hand, here is another example of producing a silicone roller from a master roll.

First leave the master roll so the pattern faces outward, and put the roll onto an iron rod. Then turn the master roll and apply silicone and leave it to harden. Remove the hardened and negative shaped silicone, and turn it outwards so that the surface pattern faces outward, and roll it into a tube. Take this silicone tube and insert it into a cylinder mold. Since the silicone tube is inserted this way, the surface will come in contact with the inside of the mold. Then insert an iron rod in the mold. The distance between the silicone tube and the rod should be 5-20mm. Then, inject silicone, and let it harden. In this case the silicone is there just to attach the tube and the rod, and therefore it does not have to be injected in slowly. If the cylinder mold is removed, the silicone tube will be attached to the iron rod, and you will have an embossing roller.

As in this case, if you produce a master roll, it will allow you to produce as many embossing rollers whenever you want. It also reduces the cost and effort of reproducing the silicone roller.

A mater roll produced in the above method is made from smooth synthetic resin, and therefore when stored must be in the form of a master roller on an iron rod so it does not fold. However in this case there are spatial limits, and working with the roller would be difficult due to its weight. Therefore another example of the present invention improves these weaknesses through a lighter master roll.

To produce a light master roll, you must apply a vacuum treated silicone mixture to the surface of the original copy. Once the silicone hardens, remove it form the original, and you will have a negative shaped silicone sheet. Pour synthetic resin onto the imprint of the above silicone sheet, and leave it to harden. The synthetic resins used here are vulcanizing synthetic resin such as melamine, epoxy, vulcanized urethane, etc. Once the above synthetic resin hardens, remove the synthetic resin form the silicone sheet, and apply silicone onto the surface of the embossing carved synthetic resin, and let it harden.

You will have a negative shaped silicone sheet. Repeat the production process and make several engraved silicone sheets with the same pattern and size. Cut each silicone sheet so that the patterns fit together and attach the silicone sheets together. Like this by connecting several silicone sheets you can get a negative shaped silicone sheet several times larger than the original copy. Again apply vacuum treated vulcanizing synthetic resin to the surface of the connected silicone sheets, and let it harden. If you remove the synthetic resin sheet from the silicone sheet, the surface of the synthetic resin sheet will not only contain the original pattern but also the connecting marks from the silicone sheet. Therefore after removing the synthetic resin sheet from the silicone sheet, use appropriate tools and chemicals to remove the connecting traces from the hardened synthetic resin sheet. After going through this process, make an embossing carved synthetic resin sheet 120% larger than the master roll, apply silicone to the synthetic resin, and let it harden. Remove the synthetic resin sheet from the silicone sheet, and you will have an engraved silicone sheet with a sequence of the original pattern without remainder of connecting traces.

Take the silicone sheet, and cut it so that it fits exactly into the cylinder mold, and roll the sheet so that the pattern faces inward. Attach the hems and make a tube to fit it into the cylinder mold. Insert an iron rod and make sure the distance between the rod and the tube is approx. 5-10mm and then smooth the synthetic resin into the space between the rod and tube. As mentioned before, put caps onto the ends of the mold, and through the injection hole, inject vulcanized synthetic resin, and through the ejection hole, pump out the air.

Other than this, you can also turn the cylinder and use the centrifugal force to produce a hardened synthetic resin master roll, but that will be described later.

After the synthetic resin is completely hardened inside the cylinder mold, remove the mold, silicone tube, and iron rod, and you will have a hardened embossing carved synthetic resin master roll. On the surface of the master roll, there will be traces of the silicone tube connecting parts, use adequate tools and chemicals to completely erase these marks so that you will have a pipe formed vulcanized synthetic resin master roll.

The pipe formed hardened synthetic resin master roll does not require an iron rod and is therefore easier to store, and since it does not deform the original pattern, it can be kept almost indefinitely. To make a silicone roller form a hardened master roll, it is the same as is already mentioned.

As mentioned before, the method of making a master roll using the centrifugal force is as follows: This method does not require rolling the silicone tube to face inwards and then inserting it with a steel rod into a cylinder mold. Instead the mold with the silicone tube inside is turned, and at the same time hardened synthetic resin is injected so that the resin will be applied equally due to the centrifugal force. This produces a pipe formed hardened master roll.

The master roll production equipment is shown in Figure 2: bracket (10) installed so that the cylinder mold (50) can turn; motor (20) installed at the side of the bracket (10); turning bar (30) connected to the turning axis of the motor (20); roller (40) installed on the turning bar (30) touching the outer side of the cylinder mold (50) to transfer the turning of the motor (20) to the cylinder mold (50); and cap (70) installed at both ends of the cylinder mold (50) to prevent the synthetic resin injected into the cylinder mold (50) from leaking out. This is the structure of the master roll production equipment.

The above motor (20) uses a changeable speed motor (20) so that when the applied hardened synthetic resin (60) reacts sensitively to the temperature inside the cylinder mold (50), and the turning speed of the cylinder mold (30) can be changed.

Thus if the temperature increases and the adhesive rate falls, the motor speed should be increased, and if the temperature falls and the adhesive rate rises, the motor speed should be decreased.

Install a cylinder mold in the above-mentioned master roll production equipment, and inject a mixture of hardened synthetic resin and start the motor. The turning of the motor is transferred to the cylinder through the rod, and the roller installed on the rod. Therefore the synthetic resin will be applied onto the negative shaped silicone tube through the centrifugal force caused by the turning of the mold, and it will slowly harden. After the resin is completely hardened, remove the cylinder mold and the silicone tube, and you will have a hardened synthetic resin master roll. The master roll will have connecting marks from the silicone tube, and use adequate tools and chemicals to completely remove the marks, and you will have a pipe shaped hardened synthetic resin master roll.

On the one hand, because silicone does not have adhesiveness, the shape of the iron rod used is very important when making an embossing roller, the reason being that if the surface of the silicone and the iron rod do not attach completely, they will come apart when the roller is pressurized, and the product will become defective.

And therefore the characteristic of the present invention is the installing of a silicone adhesive material on the surface of the iron rod.

As shown in Figure 3, the structure is to install steel nail (90) on the outer surface of the iron rod (80). The steel nails are supposed to pierce into the silicone, and since the silicone is approx. 5-20mm thick, the diameter of the nails should be 4-8mm, and the distance between nails should be 10-40mm. Since the silicone applied will flow between the nail, the silicone will be fastened tight.

In another example of the present invention, the adhesive material can be supplemented by a wire net or a sheet, having holes on the surface. In the case of wire, the empty space should be approx. 2-50mm, no more and no less. The reason is that if the space is too small, air bubbles can form when the silicone is injected, and if it is too big, the silicone in that part can fall off causing a defect.

In the case of cloth first you apply an adhesive agent and then stick the cloth onto the rod. The cloth used here should be 0.5-2mm and the adhesive agent should be let to dry fully.

Like this applying different kinds of adhesive materials to the surface of the iron rod prevent the silicone from coming loose when applied to the surface of the iron rod.

As explained above according to the present invention, before producing the embossing roller, it checks the pattern and the surface condition beforehand so that connecting marks do not remain, and also using the master roll, it is possible to make several embossing rollers, allowing the mass manufacturing of products. By increasing the attachment between the iron rod and the silicone, it reduces the chance of the silicone becoming loose, thus preventing deterioration of quality of products. While the present invention has been particularly shown and described with reference to particular embodiment thereof, it will be understood by those skilled in the art that various changes in form and details may be effected therein without departing from the scope of the invention as defined by the appended claims.

## Claims

1. A method of manufacturing an embossing roller, comprising the steps of:
applying vacuum treated mixture of silicone on the original copy, and after it hardens, removing the silicone and obtaining a silicone sheet of embossed carving;
applying a smooth vacuum-treated synthetic resin to the negative surface of the silicone, and after it hardens, removing the silicone sheet and obtaining an engraved synthetic resin sheet;
making several synthetic resin sheets and cutting them to fit each pattern and then connecting them together;
applying vacuum-treated silicone to the surface of the synthetic resin sheet and after it hardens, removing the synthetic resin sheet and obtaining a large engraved silicone sheet;
removing the connecting traces left from the large silicone sheet with adequate tools and chemicals, and producing an engraved silicone sheet without any traces;
applying synthetic resin on the silicone sheet, and after it hardens, removing the silicone sheet and obtaining a synthetic resin sheet with sequential patterns without connecting traces;
cutting the synthetic resin sheet so it will fit the cylinder mold precisely and then rolling the sheet so the pattern faces inward into a tube and attaching the hems; and then inserting the tube into the mold and putting the iron rod into the mold, and then pouring silicone between the synthetic resin and the iron rod;
removing the cylinder mold after the silicone hardens so that the synthetic resin tube on the outside of the iron rod is an engraved and hardened silicone embossing roller: and
removing the connecting traces on the silicone embossing roller using suitable tools and chemicals.

2. The method of Claim 1, wherein the synthetic resin is selected from the group of smooth synthetic resins consisting of PVC and polyurethane.

3. The method of Claim 1, which comprises cutting the sheets according to the connecting surfaces and connecting the sheets together, in order for the pattern of several synthetic resin sheets to fit together.

4. The method of Claim 1, comprising the step of pouring silicone between the synthetic resin and the iron rod so that the caps are placed on the ends, and the iron rod is fit into the hole of the cap, and through one end of the cap, the injection hole, vacuum-treated silicone is injected, and through the other ejection hole, air is sucked out so that the silicone is filled up completely.

5. A method of manufacturing a master roller, comprising the steps of:
manufacturing an embossing roller according to the method of any one of claims 1 to 4;
applying smooth synthetic resin to the surface of the finished silicone embossing roller, letting the resin harden, removing the hardened synthetic resin of embossed carving and turning it outwards so that the pattern faces outward.

6. A method of manufacturing an embossing roller from a master roller, comprising the steps of:
manufacturing a master roller according to the method of claim 5;
turning inside out the master roll so that the pattern faces inward, inserting the roll into a cylinder mold and inserting an iron rod, injecting silicone between the master roll and the iron rod, and after the silicone hardens, removing the mold and the master roll, for obtaining an embossing roller having hardened silicone of embossed carving on the outer periphery of the iron rod.

7. A method of manufacturing an embossing roller from a master roller, comprising the steps of:
manufacturing a master roller according to the method of claim 5;
inserting an iron rod into the master roll, rotating the rod and then applying silicone to the surface of master roll and letting it harden, removing the silicone and turning it so the surface pattern faces outward in order to make a silicone tube, and inserting the silicone tube into a cylinder mold and then inserting an iron rod into a silicone tube with the distance between the iron rod and the silicone being 5-20mms, and then inserting silicone into the space between the rod and the tube, and letting it harden and removing the mold.

8. A method of manufacturing hardened master roller, comprising the steps of:
applying vacuum-treated mixture of silicone to the surface of the original copy, letting it harden and then removing the silicone to obtain a silicone sheet;
applying vacuum-treated synthetic resin to the surface of the silicone sheet and letting it harden, and removing the silicone, for obtaining a synthetic resin sheet of embossed carving;
applying silicone to the above synthetic resin sheet, and letting it harden and removing to obtain an engraved silicone sheet;
making several sheets of silicone through the above process and cutting it according to the pattern, and attaching the sheets to form a large silicone sheet;
applying a vacuum-treated vulcanized synthetic resin to the above silicone sheet and letting it harden, and then removing the silicone, for obtaining a large vulcanized synthetic resin sheet;
removing the connecting traces left on the above synthetic resin sheet using appropriate tools and chemicals so as to obtain an engraved synthetic resin sheet without connecting traces;
applying silicone to the synthetic resin sheet, letting it harden and removing the silicone in order to obtain a sequential pattern engraved silicone sheet without connecting parts;
cutting the above silicone sheet so it fits the cylinder mold and rolling the sheet into a tube so the pattern faces the inside, and attaching the hems and inserting the tube into the mold, and inserting an iron rod that has a distance of 5-10mm from the silicone sheet, and injecting the hardened synthetic resin between the rod and the silicone;
removing the mold and the iron rod in order to obtain a pipe shaped vulcanized synthetic resin tube;
removing the connecting traces left on the synthetic resin tube using proper tools and chemicals.

9. The method of Claim 8, comprising the step of injecting hardened synthetic resin between the rod and the silicone, comprising;
rotating the cylinder mold, pouring the hardened synthetic resin onto the surface of rotating silicone tube so that the resin is applied equally to the silicone tube due to the centrifugal force.

10. The method of Claim 1, 4, 7 or 8 comprising in the iron rod having a silicone adhesive material on its surface so that the silicone does not come off.

11. The method of Claim 10, wherein the silicone adhesive material comprises several steel mails which are attached lengthwise to the surface of the iron rod.

12. The method of Claim 10, wherein the silicone adhesive material comprises a wire net.

13. The method of Claim 10, wherein the silicone adhesive material comprises a fabric.

## Patentansprüche

1. Verfahren zum Herstellen einer Prägewalze, umfassend die Schritte:
das Aufbringen eines vakuumbehandelten Silikongemisches auf die Originalkopie, und, nachdem es härtet, das Entfernen des Silikons und das Erhalten einer Silikonlage mit geprägter Textur,
das Aufbringen eines glatten vakuumbehandelten synthetischen Harzes auf die negative Oberfläche des Silikons, und, nachdem es härtet, das Entfernen der Silikonlage und das Erhalten einer gravierten synthetischen Harzlage,
das Herstellen mehrerer synthetischer Harzlagen und deren Schneiden, um jedes Muster anzupassen, und dann das Miteinanderverbinden,
das Aufbringen eines vakuumbehandelten Silikons auf die Oberfläche der synthetischen Harzlage, und, nachdem es härtet, das Entfernen der synthetischen Harzlage und das Erhalten einer großen gravierten Silikonlage,
das Entfemen der verbliebenen Verbindungsspuren von der großen Silikonlage mit geeigneten Werkzeugen und Chemikalien und das Herstellen einer gravierten Silikonlage ohne Spuren,
das Aufbringen eines synthetischen Harzes auf die Silikonlage, und nachdem es härtet, das Entfernen der Silikonlage und das Erhalten einer synthetischen Harzlage mit aufeinanderfolgenden Mustern ohne Verbindungsspuren,
das Schneiden der synthetischen Harzlage, so daß sie sich der Zylinderform präzise anpasst, und dann das Rollen der Lage, so daß das Muster nach innen in einem Rohr liegt und das Anbringen der Einfassungen und dann das Einsetzen des Rohrs in die Form und das Einbringen des Eisenstabs in die Form und dann das Gießen von Silikon zwischen das synthetische Harz und den Eisenstab,
das Entfemen der Zylinderform, nachdem das Silikon härtet, so daß das synthetische Harzrohr an der Außenseite des Eisenstabs eine gravierte und gehärtete Silikon-Prägewalze ist, und
das Entfernen von Verbindungsspuren auf der Silikon-Prägewalze unter Verwenden geeigneter Werkzeuge und Chemikalien.

2. Verfahren nach Anspruch 1, wobei das synthetische Harz aus der Gruppe glatter synthetischer Harze, bestehend aus PVC und Polyurethan, ausgewählt ist.

3. Verfahren nach Anspruch 1, welches das Schneiden der Lagen entsprechend der Verbindungsoberflächen und das Miteinanderverbinden der Lagen, um die Muster mehrerer synthetischer Harzlagen aneinander anzupassen, umfaßt.

4. Verfahren nach Anspruch 1, umfassend den Schritt des Gießens von Silikon zwischen das synthetische Harz und den Eisenstab derart, daß die Abdekkungen an den Enden angeordnet sind, und der Eisenstab in das Loch der Abdeckung eingefügt wird und durch ein Ende der Abdeckung, das Injektionsloch, vakuumbehandeltes Silikon injiziert wird und durch das andere Auslaßloch Luft ausgesaugt wird, so daß das Silikon komplett aufgefüllt wird.

5. Verfahren zum Herstellen einer Masterwalze, umfassend die Schritte:
das Herstellen einer Prägewalze gemäß dem Verfahren nach einem der Ansprüche 1 bis 4,
das Aufbringen eines glatten synthetischen Harzes auf die Oberfläche der fertigen Silikon-Prägewalze, das Härtenlassen des Harzes, das Entfernen des gehärteten synthetischen Harzes mit geprägter Textur und dessen Nachaußenkehren, so daß das Muster außen liegt.

6. Verfahren zum Herstellen einer Prägewalze aus einer Masterwalze, umfassen die Schritte:
das Herstellen einer Masterwalze nach dem Verfahren von Anspruch 5,
das Nachaußenkehren der Masterwalze, so daß das Muster innen liegt, das Einsetzen der Walze in eine Zylinderform und das Einsetzen eines Eisenstabs, das Injizieren von Silikon zwischen die Masterwalze und den Eisenstab, und, nachdem das Silikon härtet, das Entfernen der Form und der Masterwalze zum Erhalten einer Prägewalze, die gehärtetes Silikon mit geprägter Textur auf der äußeren Oberfläche des Eisenstabs aufweist.

7. Verfahren zum Herstellen einer Prägewalze aus einer Masterwalze, umfassend die Schritte:
das Herstellen einer Masterwalze nach dem Verfahren von Anspruch 5,
das Einsetzen eines Eisenstabs in die Masterwalze, das Rotieren des Stabs und dann das Aufbringen von Silikon auf die Oberfläche der Masterwalze und dessen Härtenlassen, das Entfernen des Silikons und dessen Wenden, so daß das Oberflächenmuster außen liegt, um ein Silikonrohr herzustellen, und das Einsetzen des Silikonrohrs in eine Zylinderform und dann das Einsetzen eines Eisenstabs in ein Silikonrohr, wobei der Abstand zwischen dem Eisenstab und dem Silikon 5 bis 20 mm beträgt, und dann das Einbringen von Silikon in den Raum zwischen dem Stab und dem Rohr und dessen Härtenlassen und das Entfernen der Form.

8. Verfahren zum Herstellen einer gehärteten Masterwalze, umfassend die Schritte:
das Aufbringen eines vakuumbehandelten Gemisches von Silikon auf die Oberfläche der Originalkopie, dessen Härtenlassen und dann das Entfernen des Silikons, um eine Silikonlage zu erhalten,
das Aufbringen eines vakuumbehandelten synthetischen Harzes auf die Oberfläche der Silikonlage und dessen Härtenlassen und das Entfernen des Silikons unter Erhalten einer synthetischen Harzlage mit geprägter Textur,
das Aufbringen von Silikon auf die vorstehende synthetische Harzlage und dessen Härtenlassen und das Entfernen, um eine gravierte Silikonlage zu erhalten,
das Herstellen mehrerer Silikonlagen durch das vorstehende Verfahren und dessen Schneiden entsprechend dem Muster und das Verbinden der Lagen, um eine große Silikonlage zu bilden,
das Aufbringen eines vakuumbehandelten vulkanisierten synthetischen Harzes auf die vorstehende Silikonlage und dessen Härtenlassen und dann das Entfernen des Silikons unter Erhalten einer großen vulkanisierten synthetischen Harzlage,
das Entfernen der auf dem vorstehenden synthetischen Harz verbliebenen Verbindungsspuren unter Verwenden geeigneter Werkzeuge und Chemikalien derart, daß eine gravierte synthetische Harzlage ohne Verbindungsspuren erhalten wird,
das Aufbringen von Silikon auf die synthetische Harzlage, dessen Härtenlassen und das Entfernen des Silikons, um eine aufeinanderfolgend gemusterte gravierte Silikonlage ohne Verbindungsteile zu erhalten,
das Schneiden der vorstehenden Silikonlage, so daß sie sich der Zylinderform anpasst, und das Rollen der Lage in ein Rohr, so daß das Muster innen liegt, und das Anbringen der Einfassungen und das Einsetzen des Rohrs in die Form und das Einsetzen eines Eisenstabs, der einen Abstand von 5 bis 10 mm von der Silikonlage aufweist, und das Injizieren des gehärteten synthetischen Harzes zwischen den Stab und das Silikon,
das Entfernen der Form und des Eisenstabs, um ein röhrenförmig geformtes vulkanisiertes synthetisches Harzrohr zu erhalten,
das Entfernen der auf dem synthetischen Harzrohr verbliebenen Verbindungsspuren unter Verwenden geeigneter Werkzeuge und Chemikalien.

9. Verfahren nach Anspruch 8, umfassend den Schritt des Injizierens des gehärteten synthetischen Harzes zwischen den Stab und das Silikon, umfassend das Rotieren der Zylinderform, das Gießen des gehärteten synthetischen Harzes auf die Oberfläche des sich rotierenden Silikonrohrs, so daß das Harz aufgrund der Zentrifugalkraft gleichmäßig auf ein Silikonrohr aufgebracht wird.

10. Verfahren nach Anspruch 1, 4, 7 oder 8, welches umfaßt, daß der Eisenstab ein Silikonhaftmaterial auf dessen Oberfläche aufweist, so daß das Silikon sich nicht ablöst.

11. Verfahren nach Anspruch 10, wobei das Silikonhaftmaterial mehrere Stahlketten umfaßt, die der Länge nach auf der Oberfläche des Eisenstabs angebracht sind.

12. Verfahren nach Anspruch 10, wobei das Silikonhaftmaterial ein Drahtnetz umfaßt.

13. Verfahren nach Anspruch 10, wobei das Silikonhaftmaterial ein Gewebe umfaßt.

## Revendications

1. Procédé de fabrication d'un rouleau gaufreur, comportant les étapes consistant à :
appliquer un mélange de silicone traité sous vide sur la copié originale, et après son durcissement, retirer la silicone et obtenir une feuille de silicone à motif gaufré,
appliquer une résine synthétique lisse traitée sous vide sur la surface négative de la silicone, et après son durcissement, retirer la feuille de silicone et obtenir une feuille de résine synthétique gravée,
réaliser plusieurs feuilles de résine synthétique et les découper pour ajuster chaque motif et les relier ensuite ensemble,
appliquer de la silicone traitée sous vide à la surface de la feuille de résine synthétique et après son durcissement, retirer la feuille de résine synthétique et obtenir une grande feuille de silicone gravée,
retirer les marques de connexion laissées depuis la grande feuille de silicone à l'aide d'outils et de composés chimiques appropriés, et produire une feuille de silicone gravée sans aucune marque,
appliquer une résine synthétique sur la feuille de silicone, et après son durcissement, retirer la feuille de silicone pour obtenir une feuille de résine synthétique ayant des motifs séquentiels sans marque de connexion,
découper la feuille de résine synthétique afin qu'elle s'adapte au moule cylindrique de manière précise et enrouler ensuite la feuille si bien que le motif fait face vers l'intérieur dans un tube et fixer les bords, et insérer alors le tube dans le moule et disposer la tige de fer dans le moule, et ensuite verser de la silicone entre la résine synthétique et la tige de fer,
retirer le moule cylindrique après le durcissement de la silicone si bien que le tube de résine synthétique sur l'extérieur de la tige de fer est un rouleau gaufreur de silicone gravée et durcie, et
retirer les marques de connexion sur le rouleau gaufreur de silicone en utilisant des outils et des composés chimiques appropriés.

2. Procédé selon la revendication 1, dans lequel la résine synthétique est choisie parmi le groupe de résines synthétiques lisses comprenant le PVC et le polyuréthane.

3. Procédé selon la revendication 1, qui comporte la découpe des feuilles conformément aux surfaces de connexion et la liaison des feuilles ensemble, afin que les motifs de plusieurs feuilles de résine synthétique s'adaptent ensemble.

4. Procédé selon la revendication 1, comportant l'étape consistant à verser de la silicone entre la résine synthétique et la tige de fer si bien que les embouts sont placés sur les extrémités, et la tige de fer est adaptée dans le trou de l'embout, et à travers une extrémité de l'embout, le trou d'injection, de la silicone traitée sous vide est injectée, et à travers l'autre trou d'éjection, de l'air est aspiré si bien que la silicone est remplie complètement.

5. Procédé de fabrication d'un rouleau maître, comportant les étapes consistant à :
fabriquer un rouleau gaufreur conformément au procédé selon l'une quelconque des revendications 1 à 4,
appliquer une résine synthétique lisse à la surface du rouleau gaufreur de silicone fini, laisser la résine durcir, retirer la résine synthétique durcie à motif gaufré et la tourner vers l'extérieur si bien que le motif fait face vers l'extérieur.

6. Procédé de fabrication d'un rouleau gaufreur à partir d'un rouleau maître, comportant les étapes consistant à :
fabriquer un rouleau maître selon le procédé de la revendication 5,
tourner vers l'intérieur le rouleau maître si bien que le motif fait face vers l'intérieur, insérer le rouleau dans un moule cylindrique et insérer une tige de fer, injecter de la silicone entre le rouleau maître et la tige de fer, et après le durcissement de la silicone, retirer le moule et le rouleau maître, pour obtenir un rouleau gaufreur ayant de la silicone durcie à motif gaufré sur la périphénie extérieure de la tige de fer.

7. Procédé de fabrication d'un rouleau gaufreur à partir d'un rouleau maître, comportant les étapes consistant à :
fabriquer un rouleau maître selon le procédé de la revendication 5,
insérer une tige de fer dans le rouleau maître, faire tourner la tige et appliquer ensuite de la silicone sur la surface du rouleau maître et la laisser durcir, retirer la silicone et le tourner si bien que le motif de surface fait face vers l'extérieur afin de réaliser un tube de silicone, et insérer le tube de silicone dans un moule cylindrique et insérer ensuite une tige de fer dans un tube de silicone, la distance entre la tige de fer et la silicone étant de 5 à 20 mm, et insérer ensuite de la silicone dans l'espace entre la tige et le tube, et la laisser durcir et retirer le moule.

8. Procédé de fabrication d'un rouleau maître durci, comportant les étapes consistant à :
appliquer un mélange traité sous vide de silicone sur la surface de la copie originale, le laisser durcir et retirer ensuite la silicone pour obtenir une feuille de silicone,
appliquer une résine synthétique traitée sous vide sur la surface de la feuille de silicone et la laisser durcir, et retirer la silicone, pour obtenir une feuille de résine synthétique à motif gaufré,
appliquer de la silicone sur la feuille de résine synthétique ci-dessus, et la laisser durcir et la retirer pour obtenir une feuille de silicone gravée,
réaliser plusieurs feuilles de silicone par l'intermédiaire du processus ci-dessus et les découper conformément au motif, et fixer les feuilles pour former une grande feuille de silicone,
appliquer une résine synthétique vulcanisée traitée sous vide sur la feuille de silicone ci-dessus et la laisser durcir, et retirer alors la silicone, pour obtenir une grande feuille de résine synthétique vulcanisée,
retirer les marques de connexion laissées sur la feuille de résine synthétique ci-dessus en utilisant des outils et des composés chimiques appropriés de manière à obtenir une feuille de résine synthétique gravée sans marque de connexion,
appliquer de la silicone sur la feuille de résine synthétique, la laisser durcir et retirer la silicone afin d'obtenir une feuille de silicone gravée à motif séquentiel sans parties de connexion,
découper la feuille de silicone ci-dessus si bien qu'elle s'adapte sur le moule cylindrique et enrouler la feuille dans un tube si bien que le motif fait face vers l'intérieur, et fixer les bords et insérer le tube dans le moule, et insérer une tige de fer qui est à une distance de 5 à 10 mm par rapport à la feuille de silicone, et injecter la résine synthétique durcie entre la tige et la silicone,
retirer le moule et la tige de fer afin d'obtenir un tube de résine synthétique vulcanisée en forme de tuyau,
retirer les marques de connexion laissées sur le tube de résine synthétique en utilisant des outils et des composés chimiques appropriés.

9. Procédé selon la revendication 8, comportant l'étape consistant à injecter une résine synthétique durcie entre le rouleau et la silicone, comportant :
la rotation du moule synthétique, le versement de la résine synthétique durcie sur la surface du tube de silicone en rotation si bien que la résine est appliquée de manière égale sur le tube de silicone du fait de la force centrifuge.

10. Procédé selon la revendication 1, 4, 7 ou 8 comportant la tige de fer ayant un matériau adhésif de silicone sur sa surface si bien que la silicone ne se détache pas.

11. Procédé selon la revendication 10, dans lequel le matériau adhésif de silicone comporte plusieurs mailles d'acier qui sont fixées dans le sens de la longueur à la surface de la tige de fer.

12. Procédé selon la revendication 10, dans lequel le matériau adhésif de silicone comporte un réseau de fils.

13. Procédé selon la revendication 10, dans lequel le matériau adhésif de silicone comporte un tissu.
